(19) **Europäisches Patentamt**

**European Patent Office**

**Office européen des brevets**

(11) **EP 1 276 264 A1**

(12) **EUROPÄISCHE PATENTANMELDUNG**

(43) Veröffentlichungstag:
**15.01.2003 Patentblatt 2003/03**

(51) Int Cl.7: **H04L 1/00**

(21) Anmeldenummer: **01116583.4**

(22) Anmeldetag: **09.07.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **SIEMENS AKTIENGESELLSCHAFT
80333 München (DE)**

(72) Erfinder:
• **Ball, Carsten, Dr.
81373 München (DE)**
• **Ivanov, Kolio, Dr.
81369 München (DE)**
• **Stark, Thomas
81476 München (DE)**

(54) **Verfahren zur paketvermittelten Datenübertragung in einem Funkkommunikationssystem mit mehreren Funkzellen**

(57)    Bei der paketvermittelten Datenübertragung werden aufeinanderfolgende, zeitlich begrenzte Funkblöcke übertragen. Eine Paketdatensession besteht dabei aus mehreren aufeinanderfolgenden Paketdatenflüssen, bestehend aus jeweils mehreren Funkblöcken. Ein Funkparameter (MCS-x$_1$) wird zu Beginn der Übertragung eines Paketdatenflusses (TBF1) in Abhängigkeit einer Entfernung zwischen einer sendenden Funkstation und einer empfangenden Funkstation und einer Signalqualität bestimmt. Für darauffolgende weitere zeitlich begrenzte Paketdatenflüsse (TBF2, TBF3) erfolgt die Bestimmung des Funkparameters zusätzlich in Abhängigkeit eines vorherigen Wertes des Funkparameters (MCS-w$_1$, MCS-w$_2$) bei der Übertragung eines vorherigen zeitlich begrenzten Funkblocks eines vorherigen Paketdatenflusses (TBF1), wobei der zeitliche Abstand zwischen der vorherigen und der aktuellen Übertragung berücksichtigt wird.

FIG 1

EP 1 276 264 A1

**Beschreibung**

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Ein Beispiel für ein Funkkommunikationssystem ist das bekannte GSM-Mobilfunknetz, dessen Architektur zum Beispiel in B. Walke, "Mobilfunknetze und ihre Protokolle", Band 1, Teubner-Verlag Stuttgart, 1998, Seite 139 bis 151 und Seite 295 bis Seite 311, beschrieben ist. Dabei ist zur Übertragung eines Teilnehmersignals jeweils ein durch einen schmalbandigen Frequenzbereich und einen Zeitschlitz gebildeter Kanal vorgesehen. Da sich ein Teilnehmersignal in einem Kanal in Frequenz und Zeit von den übrigen Teilnehmersignalen unterscheidet, kann die empfangende Funkstation eine Detektion der Daten des Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

Ein Funkkommunikationssystem, zum Beispiel ein GSM-Mobilfunknetz, umfasst eine Vielzahl von Mobilvermittlungsstellen (MSC), die untereinander vernetzt sind, und die den Zugang zu einem Festnetz herstellen. Ferner sind diese Mobilvermittlungsstellen mit mindestens einer Basisstationssteuerung (Base Station Controller, BSC) verbunden. Die Basisstationssteuerung ermöglicht eine Verbindung zu mindestens einer Basisstation (Base Transceiver Station, BTS) und nimmt die Verwaltung der funktechnischen Ressourcen der angeschlossenen Basisstationen vor. Eine solche Basisstation ist eine Funkstation, die über eine Funkschnittstelle eine Nachrichtenverbindung zu Mobilstationen aufbauen kann.

Ist in dem Funkkommunikationssystem ein Paketdatendienst vorgesehen, wie zum Beispiel GPRS oder auch EGPRS im Rahmen der Weiterentwicklung des GSM-Mobilfunknetzes, so ist die Basisstationssteuerung zur Übertragung von paketvermittelten Daten darüber hinaus mit einem Paketdatendienstknoten (Serving GPRS Support Note) verbunden, der den Zugang zu einem Festdatennetz herstellt. In der Basisstationssteuerung oder evtl. auch in der Basisstation ist eine Paketdatensteuereinheit (Packet Control Unit, PCU) vorgesehen, die die paketvermittelten Daten verwaltet und deren Signalisierung steuert. Ein Operations- und Wartungszentrum realisiert Kontroll- und Wartungsfunktionen für das Mobilfunknetz beziehungsweise für Teile davon.

Bei der paketvermittelten Datenübertragung erfolgt die Datenübertragung für mehrere Teilnehmer über ein- und denselben physikalischen Kanal. Jeder Teilnehmer kann dabei auch mehrere physikalische Kanäle gleichzeitig belegen (multislot Fall). Je Teilnehmer wird ein Paketdatenfluss (temporary block flow, TBF) dabei in zeitlich begrenzte Funkblöcke zerlegt, die übertragen werden. Bei GPRS koennen diese Funkblöcke bei gleicher Laenge (ein Funkblock umfasst 4 bursts alle 20ms) unterschiedliche Nutzlast haben je nach eingestelltem Modulations-/Kodierschema. Dabei werden die zeitlich begrenzten Funkblöcke von unterschiedlichen Teilnehmern (dynamic allocation des medium access-Protokoll MAC) bzw. die zeitlich begrenzten Paketdatenflüsse verschiedener Teilnehmer (fixed allocation des medium access-Protokoll MAC) zeitlich verschachtelt über den Kanal übertragen. Messwerte über die Qualität des Kanals für den einzelnen Teilnehmer sind daher nur während der Übertragung der einzelnen zeitlich begrenzten Funkblöcke des Teilnehmers verfügbar sowie durch periodisch uebertragene Messprotokolle (measurement reports). Diese Messwerte werden zur Einstellung verschiedener Funkparameter verwendet. Als Messwerte dienen die Empfangsfeldstaerke, die Blockfehlerrate, der Interferenzpegel des Kanals sowie die Bitfehlerwahrscheinlichkeit. Bei der Übertragung eines Paketdatenflusses koennen die Funkparameter wie beispielsweise die Sendeleistung sowie das Modulations-/Kodierschema den Kanalbedingungen dynamisch angepasst werden. Bei der Übertragung des nächsten Paketdatenflusses desselben Teilnehmers müssen die Funkparameter neu eingestellt werden.

Aus O. Queseth et al, Algorithms for link adaption in GPRS, 1999 IEEE, ist bekannt, zur Einstellung des Funkparameters Modulations- und Codierschema zu Beginn der Übertragung eines Paketflusses ein Modulations- und Codierschema fest vorzugeben. Anschliessend wird der mittlere C/I-Wert (das ist das Signal-Stör-Verhältnis ) waehrend der Übertragung der Funkblöcke gemessen und das Modulations- und Codierschema entsprechend dieses Wertes angepasst. Die Auswahl des Modulations- und Codierschemas entsprechend der Auslastung des Funksystems, wird als vorteilhaft angesehen.

In diesem bekannten Verfahren wird zu Beginn der Übertragung eines Paketdatenflusses das Modulations- und Codierschema auf einen vorgegebenen Wert eingestellt.

Simulationen zeigen jedoch, dass gerade in typischen ruralen Zellen Teilnehmer nahe der Basisstation sehr hohe Modulations- und Kodierschemas fahren koennen und Teilnehmer am Zellrand nur kleine. Damit ist die feste Voreinstellung des Modulations- und Kodierschemas nicht optimal und verringert die Zellkapazitaet. Wird das Schema zu hoch eingestellt, müssen Teilnehmer am Zellrand einen Grossteil der Daten mehrfach verschicken (sogenannte Retransmissionen), weil die Bloecke als fehlerhaft dekodiert werden. Wird das Schema zu niedrig eingestellt, koennen Teilnehmer nahe an der BTS nicht den optimalen Durchsatz erzielen.

Während der Übertragung wird das verwendete Modulations- und Codierschema in Abhängigkeit einer Messgröße, insbesondere des Träger zu Interferenzverhältnisses (C/I) bzw. der Blockfehlerrate, den aktuellen Funkverhältnissen angepasst. Dieser Anpassungsmechanismus ist träge, da erst mehrere Bloecke uebertragen werden müssen, um eine korrekte Anpassung vornehmen zu können.

Das ist der kritische Punkt. Bei typischen Paketdiensten wie WAP und HTTP werden meist kurz hintereinander im Abstand von wenigen Sekunden Lesezeit Paketdatenfluesse mit Laengen von 10 - 100 Funkblöcken übertragen. Bis eine langsam reagierende Ratenanpassung das bestmögliche Kodierschema eingestellt hat, ist der Paketdatenfluss meist schon zum Grossteil vorüber. Zu Beginn des naechsten Paketdatenflusses wird wieder der fest vorgegebene Wert verwendet.

Der Erfindung liegt daher das Problem zugrunde, ein Verfahren zur paketvermittelten Datenübertragung in einem Funkkommunikationssystem mit mehreren Funkzellen anzugeben, bei dem mindestens ein Funkparameter besser an gegebene Funkverhältnisse angepasst wird.

Dieses Problem wird erfindungsgemäß gelöst durch ein Verfahren gemäß Anspruch 1. Weitere Ausgestaltungen der Erfindung ergeben sich aus den Unteransprüchen.

In dem Verfahren zur paketvermittelten Datenübertragung in einem Funkkommunikationssystem mit mehreren Funkzellen wird ein Paketdatenfluss zwischen einer sendenden Funkstation und einer empfangenden Funkstation in Form von aufeinanderfolgenden, zeitlich begrenzten Funkblöcken übertragen. Für die Übertragung eines ersten zeitlich begrenzten Funkblockes eines ersten Paketdatenflusses wird mindestens ein Funkparameter in Abhängigkeit einer Entfernung - beispielsweise gegeben durch die Vorhaltezeit (Timing Advance) - zwischen der sendenden Funkstation und der empfangenden Funkstation und in Abhängigkeit einer Signalqualität bzw. eines Empfangspegels eines von der sendenden Funkstation gesendeten und der empfangenden Funkstation empfangenen Signals bestimmt. In dem Verfahren wird ausgenutzt, dass innerhalb einer Funkzelle die Funkverhältnisse von der Entfernung zwischen der sendenden Funkstation und der empfangenden Funkstation abhängen. Weitere Einflüsse auf die Funkverhältnisse werden über die Signalqualität des von der sendenden Funkstation gesendeten und der empfangenden Funkstation empfangenen Signals berücksichtigt. Die Signalqualität kann zum Beispiel anhand eines Signal- zu Interferenzverhältnisses oder anhand eines Empfangssignalspegels bewertet werden. Als Signal ist zum Beispiel der sogenannte Access Burst, das heisst, das Signal, mit dem eine sendende Funkstation einer empfangenden Funkstation mitteilt, dass eine Verbindungsaufnahme durchgeführt werden soll, geeignet. Ferner koennen die periodisch von Teilnehmern im idle sowie im transfer Modus gesendeten Mess-Berichte verwendet werden.

Für die Übertragung weiterer zeitlich begrenzter Paketdatenflüsse liegt es im Rahmen der Erfindung, den mindestens einen Funkparameter jeweils in Abhängigkeit der Entfernung zwischen der sendenden Funkstation und der empfangenden Funkstation und der Abhängigkeit der Signalqualität eines von der sendenden Funkstation gesendeten und von der empfangenden Funkstation empfangenen Signals, sowie in Abhängigkeit von einem vorherigen Wert des Funkparameters, bei der Übertragung eines vorherigen zeitlich begrenzten Paketdatenflusses zu bestimmen, sofern der zeitliche Abstand zwischen dem Ende der vorherigen Übertragung und der aktuellen Übertragung eine vorgegebene Maximalzeit, welche z.B. durch einen Timer gesteuert ist, nicht überschreitet. Bei sogenannten "Concurrent" Paketdatenflüssen, d.h.beim Aufbau einer Aufwaertsverbindung waehrend eine Abwaertsverbindung besteht (bzw. umgekehrt) wird vorzugsweise ebenfalls der mindestens eine Funkparameter der bereits bestehenden Verbindung verwendet. Zu diesem Zweck wird vorzugsweise im Netzwerk für jede Teilnehmerstation eine Datenstruktur angelegt, welche den mindestens einen Funkparameter enthaelt und deren Gültigkeit von obigem Timer abhaengt. Bei dieser Vorgehensweise wird angenommen, dass sich die Funkverhältnisse zwischen der vorherigen Übertragung und der aktuellen Übertragung nicht allzu sehr verändert haben. Durch Berücksichtigung des vorherigen Wertes des mindestens einen Funkparameters wird in das Verfahren eine Erinnerungsfunktion eingeführt. Dadurch werden Anpassungen des Funkparameters während des vorherigen zeitlich begrenzten Paketdatenflusses in die aktuelle Übertragung übernommen. Das hat den Vorteil, dass die Erfahrungen aus dem letzten Paketdatenfluss berücksichtigt werden und ein optimaler Wert des Funkparameters schneller eingestellt werden kann.

Vorzugsweise nimmt der Einfluss des vorherigen Wertes des Funkparameters mit zunehmendem zeitlichen Abstand zwischen der letzten Übertragung des vorherigen Paketdatenflusses und des neuen Paketdatenflusses ab. Dadurch wird berücksichtigt, dass sich die Funkverhältnisse mit zunehmendem zeitlichen Abstand zwischen der vorherigen Übertragung und der aktuellen Übertragung zunehmend ändern können, etwa auf Grund einer Bewegung einer der Funkstationen oder auf Grund von Laständerungen in der Zelle durch neuhinzukommende bzw. sich abmeldende Teilnehmer.

Als Funkparameter kommen beispielsweise das Modulations/Kodierschema, die Parameter fuer die aufwärts und abwärts Leistungsregelung, die Zeitschlitz-Allokierung (Multislots) usw. in Frage. Zusaetzlich abgespeichert werden koennen in der obigen Datenstruktur beispielsweise auch der Empfangspegel und der Signal-Stör-Abstand.

Gemäß einer Ausführungsform der Erfindung wird ein Funkparameter FP bestimmt, für den n Werte mit der Bezeichnung FP-x, x=1,...,n zur Verfügung stehen. Als Beispiel sei als Funkparameter FP das EGPRS Modulations-/Kodierschema MCS-1,..., MCS-9 bzw. das GPRS Kodierschema CS-1,...,CS-4 genannt. Falls der zeitliche Abstand zwischen dem Ende der Übertragung des vorherigen Paketdatenflusses und der Übertragung des weiteren Paketdatenflusses größer als die Maximalzeit ist, wird dem Funkparameter FP der Wert FP-x zugewiesen mit

$$x=\text{Integer}(a*y+(1-a)*z), \tag{1}$$

wobei

a ein beliebig einstellbarer Gewichtsfaktor mit 0<a<1,

FP-y ein für die gegebene Entfernung zwischen der sendenden Funkstation und der empfangenden Funkstation vorgegebener Wert für den Funkparameter FP mit Index y und

FP-z ein für die gegebene Signalqualität bzw. Empfangspegel eines von der sendenden Funkstation gesendeten und von der empfangenden Funkstation empfangenen Signals vorgegebener Wert für den Funkparameter FP mit Index z ist.

Falls der zeitliche Abstand zwischen dem Ende der Übertragung des vorherigen Funkblocks und der Übertragung des weiteren Funkblocks geringer als die Maximalzeit T_max_last ist, wird dem Funkparameter der Wert FP-x zugewiesen mit

$$x=\text{Integer}(b*y+c*z+d*(w-y)*T/T\_max\_last), \tag{2}$$

wobei

b, c, d beliebig einstellbare Gewichtsfaktoren sind mit b+c+d=1 und 0<b,c,d<1,

FP-y ein für die gegebene Entfernung zwischen der sendenden Funkstation und der empfangenden Funkstation vorgegebener Wert für den Funkparameter ist,

FP-z ein für die gegebene Signalqualität bzw. Empfangspegel eines von der sendenden Funkstation gesendeten und von der empfangenden Funkstation empfangenen Signals vorgegebener Wert für den Funkparameter ist,

FP-w der vorherige Wert des Funkparameters beim Ende des letzten Paketdatenflusses ist,

T der zeitliche Abstand zwischen dem Ende der Übertragung des vorherigen zeitlich begrenzten Paketdatenflusses und der Übertragung des neuen zeitlich begrenzten Paketdatenflusses ist.

Es liegt im Rahmen der Erfindung, dass die verwendeten Gewichtsfaktoren zeitlich abhängig sind bzw. sein können. Das hat den Vorteil, dass der Einfluss der verschiedenen Randbedingungen, zum Beispiel der Entfernung zwischen sendender und empfangender Funkstation oder der Signalqualität mit zunehmender Dauer des Abstandes vom letzten Paketdatenfluss zum neuen Paketdatenfluss unterschiedlich sein kann. Damit kann zum Beispiel dem Einfluss des vorherigen Wertes ein höheres Gewicht als dem Einfluss der Signalqualität des Access Bursts gegeben werden, bei zunehmender Dauer der idle Zeit zwischen zwei aufeinanderfolgenden Paketdatenflüssen. Ferner kann anstelle des linearen Zusammenhangs in Gleichung 1 auch eine beliebig andere Funktionalität erzeugt werden.

Zusaetzlich können auch die Parameter a,b,c und d in Gleichung 1 bzw. 2 zeitlich variabel sein und sich automatisch den optimalen Verhältnissen in einer Zelle anpassen.

Vorzugsweise wird am Ende der Übertragung jedes zeitlich begrenzten Paketdatenflusses der aktuelle Wert des Funkparameters in Abhängigkeit der momentanen Entfernung zwischen der sendenden Funkstation und der empfangenden Funkstation fuer jeden Teilnehmer gespeichert und es werden beispielsweise entsprechende Mittelwerte berechnet. Dabei wird jeweils aus dem aktuellen Wert des Funkparameters und dem gespeicherten vorgegebenen Wert des Funkparameters ein neuer vorgegebener Wert des Funkparameters für die gegebene Entfernung zwischen der sendenden Funkstation und der empfangenden Funkstation berechnet und gespeichert. Auf diese Weise wird der für die gegebene Entfernung zwischen der sendenden Funkstation und der empfangenden Funkstation vorgegebene Wert des Funkparameters aktualisiert und an die funktechnischen Gegebenenheiten angepasst. Damit bildet sich automatisch für jede Zelle ein entfernungsabhängiges Profil des mindestens einen Funkparameters aus, welches bei neu beginnenden zeitlich begrenzten Paketdatenflüssen sofort eine zelltypische, bestmögliche Einstellung erlaubt.

Desgleichen kann am Ende eines Paketdatenflusses auch ein Update der Parameter a,b,c und d erfolgen, je nachdem welcher Parameterwert am Anfang des Paketdatenflusses die bestmögliche Schätzung des Endzustandes des Funkparameters am Ende des Paketdatenflusses erzielt hätte.

Dabei ist es besonders vorteilhaft, den neuen vorgegebenen Wert des Funkparameters durch Mittelwertbildung aus dem aktuellen Wert des Funkparameters und dem gespeicherten vorgegebenen Wert des Funkparameters zu berechnen. Die Mittelwertbildung ist mit geringem Rechenaufwand durchführbar.

Vorzugsweise wird bei der Bestimmung des Funkparameters zusätzlich berücksichtigt, in welcher Art von Funkzelle sich die sendende Funkstation und/oder die empfangende Funkstation befindet. Dadurch werden die unterschiedlichen funktechnischen Gegebenheiten, zum Beispiel im dicht oder weniger dicht bebauten Gebiet, bergigem Terrain oder auf einem offenen Gelände berücksichtigt.

Die Verwaltung der Werte für den mindestens einen Funkparameter erfolgt vorzugsweise in einem Operations- und Wartungszentrum des Funkkommunikationssystems.

Als Funkparameter, der nach diesem Verfahren bestimmt wird, ist sowohl ein Modulations und Codierschema als auch ein Parameter zur Sendeleistungsregelung, ein Parameter zur Steuerung einer richtungsselektiven Antenne und/oder einer adaptiven Antenne und/oder ein netzwerkgesteuertes Messprotokoll zur Neuauswahl von Funkzellen geeignet.

Während der Übertragung eines zeitlich begrenzten Paketdatenflusses wird die empfangende Funkstation von der sendenden Funkstation durch sogenanntes "Polling" aufgefordert, Messwerte (beispielsweise die Blockfehlerrate, Empfangspegel, Interferenzpegel, etc.) zu senden, die die Qualität des empfangenen Datenflusses widerspiegeln. Zusaetzlich koennen periodische Mess-Berichte von der Teilnehmerstation an das Netzwerk angefordert werden. Anhand dieser Messwerte wird der mindestens eine Funkparameter an aktuelle Funkverhältnisse angepasst. Vorzugsweise ist der Abstand, zwischen zwei aufeinander folgenden Anforderungen zur Übersendung eines Messwertes nicht konstant. Vorzugsweise nimmt der Abstand zwischen aufeinander folgenden Anforderungen von kleinen Werten zu Beginn des Datenflusses ausgehend mit zunehmender Dauer des zeitlich begrenzten Funkblocks zu. Dadurch wird gerade zu Beginn des Datenflusses eine beschleunigte Anpassung des Funkparameters an die funktechnischen Gegebenheiten erzielt.

Im Folgenden wird die Erfindung anhand eines Ausführungsbeispiels und der Figuren näher erläutert.

Figur 1 zeigt die Einstellung und Anpassung des Modulationsund Codierschemas während der Übertragung dreier aufeinander folgender zeitlich begrenzter Paketdatenflüsse (TBFs), die jeweils aus mehreren Funkblöcken bestehen..

Figur 2 und Figur 3 zeigt Beispiele für die zeitliche Verteilung von Anforderungen für Messsignale zur Bewertung der Qualität einer Funkverbindung.

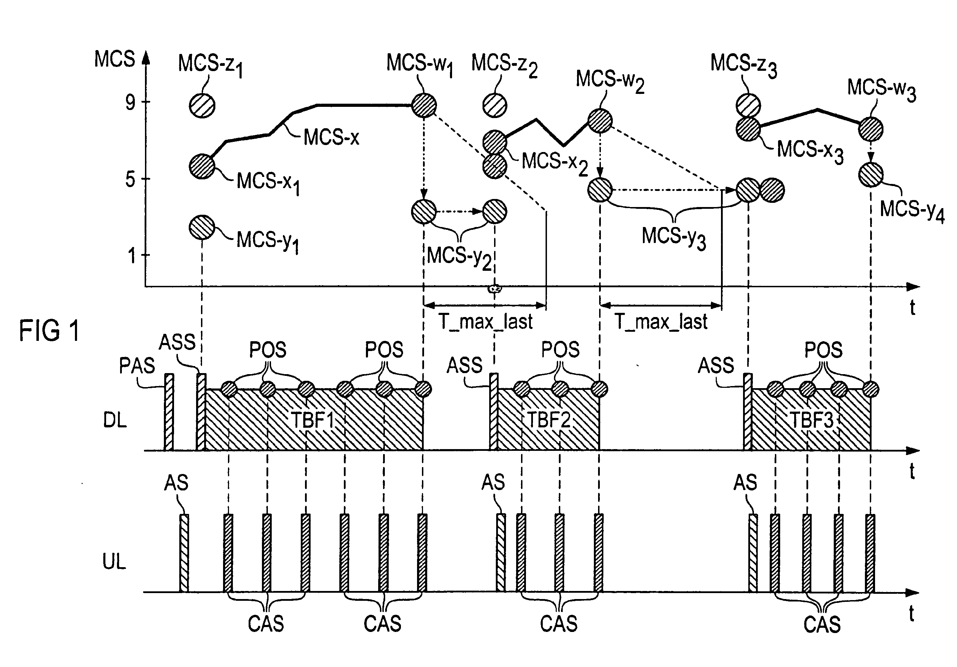

Zur paketvermittelten Datenübertragung in einem Funkkommunikationssystem, das zum Beispiel nach dem GPRS bzw. EGPRS-Standard arbeitet, wird eine Paketdatenübertragung in zum Beispiel drei aufeinander folgenden, zeitlich begrenzten Paketdatenflüssen TBF1, TBF2, TBF3 übertragen (siehe Figur 1), die wiederum aus mehreren Funkblöcken bestehen. Die Datenübertragung erfolgt zum Beispiel von einer Basisstation als sendender Funkstation zu einer Mobilstation als empfangender Funkstation oder umgekehrt. Dabei wird die Senderichtung von der Basisstation zur Mobilstation als Abwärtsrichtung, auch Down Link, DL bezeichnet. Die Senderichtung von der Mobilstation zur Basisstation wird als Aufwärtsrichtung, auch Up Link, UL bezeichnet.

Zu Beginn der Funkverbindung sendet die Basisstation ein Funkrufsignal PAS, auch Pagingsignal genannt. Daraufhin antwortet die Mobilstation mit einem Anforderungssignal AS, auch Accesssignal genannt, zum Aufbau einer Funkverbindung. Die Basisstation ordnet der Mobilstation mit Hilfe eines Zuordnungssignals ASS in einem sogenannten Assignment einen Verkehrskanal zu. Daraufhin beginnt die Übertragung eines ersten zeitlich begrenzten Paketdatenflusses TBF1. Für die Übertragung wird ein Anfangswert MCS-$x_1$ für ein Modulations- und Codierschema bestimmt nach folgender Vorschrift:

$$\text{MCS-}x_1 \text{ mit } x_1 = \text{Integer } (a*y_1 + (1-a)z_1). \tag{3}$$

Dabei ist MCS-$y_1$ ein Wert für das Modulations- und Codierschema, der für die gegebene Entfernung zwischen der Mobilstation und der Basisstation vorgegeben ist. Die gegebene Entfernung zwischen der Mobilstation und der Basisstation ist zum Beispiel über den Zeitvorhalt, auch Timing Advance genannt, parametrisiert. Der Wert MCS-$z_1$ für das Modulationsund Codierschema ist in Abhängigkeit der Signalqualität/Empfangspegel des Zugangssignals AS vorgegeben. a ist ein Gewichtsfaktor mit einem Wert zwischen 0 und 1, der zum Beispiel im Operations- und Wartungszentrum des Funkkommunikationssystems gespeichert ist.

Während der Übertragung des ersten zeitlich begrenzten Funkblocks TBF1 werden von der Basisstation regelmäßig Anforderungen an die Mobilstation gesandt, ein Messsignal über die Qualität der Datenübertragung zu übermitteln. Dieser Vorgang wird als Polling bezeichnet. Die Basisstation sendet jeweils ein Pollingsignal POS an die Mobilstation, auf das die Mobilstation mit einem Control Acknowledgment-Signal CAS antwortet. Das Control Acknowledgment-Signal CAS gibt an, welcher Prozentsatz an Paketdaten als lesbar empfangen wurde sowie macht Angaben über Empfangspegel und Interferenzlevel am Ort der Teilnehmerstation. Es stellt somit ein Maß für die Qualität der Funkverbindung dar. Anhand dieser Messgröße wird der aktuelle Wert MCS-x des Modulations- und Codierschemas von dem Anfangswert MCS-$x_1$ angepasst. Bei guter Qualität der Funkverbindung wird ein höheres Modulations- und Codierschema, bei dem $x > x_1$ ist, zugewiesen. Dieser Vorgang wiederholt sich über die gesamte Dauer des zeitlich begrenzten Funkblocks TBF1. Am Ende der Übertragung weist das Modulationsund Codierschema einen ersten Endwert MCS-$w_1$ auf.

Die Übertragung eines zweiten zeitlich begrenzten Paketdatenflusses TBF2 wird wiederum durch ein Zuordnungssignal ASS der Basisstation an die Mobilstation eingeleitet. Die Mobilstation antwortet wiederum mit einem Zugangssignal AS bzw. mit einem control acknowledge bestehend aus Access-Signalen. Da der zeitliche Abstand zwischen dem Ende der Übertragung des ersten zeitlich begrenzten Paketflusses TBF1 und dem Beginn der Übertragung des zweiten zeitlich begrenzten Paketflusses TBF2 kleiner einer Maximalzeit T_max_last ist, wird ein zweiter Startwert $MCS-x_2$ für das Modulations- und Codierschema nach folgender Vorschrift bestimmt:

$$MCS\text{-}x_2 \text{ mit } x_2 = Integer(b*y_2 + c*z_2 + d*(w_1 - (w_1 - y_2)*T/T\_max\_last). \tag{4}$$

Dabei ist $y_2$ durch den Wert $MCS-y_2$ bestimmt, der durch Mittelung aus dem Endwert $MCS-w_1$ für das Modulations- und Codierschema und dem im System vorgegebenen, von der Entfernung zwischen der Mobilstation und der Basisstation abhängigen Wert $MCS-y_1$ gewonnen wird. $z_2$ bestimmt sich aus dem Wert $MCSz_2$ für das Modulationsschema, der von der Signalqualität des Zuordnungssignals AS für den zweiten zeitlich begrenzten Funkblock TBF2 abhängt. b, c, d sind Gewichtsfaktoren, deren Summe gleich 1 ist und die jeweils zwischen 0 und 1 liegen.

Während der Übertragung des zweiten zeitlich begrenzten Paketflusses TBF2 werden wiederum von der Basisstation Pollingsignale POS zur Mobilstation gesendet, die diese mit Control Acknowledgement-Signale CAS beantwortet.

Aus dem Control Acknowledgement-Signalen CAS wird wiederum eine Anpassung des aktuellen Wertes MCS-x des Modulationsund Codierschemas MCS an die aktuellen Funkverhältnisse abgeleitet. Verbessern sich die Funkbedingungen, so wird der Wert x vergrößert, verschlechtern sich die Funkbedingungen, so wird der Wert x verkleinert.

Am Ende der Übertragung des zweiten zeitlich begrenzten Funkblockes TBF2 wird ein zweiter Endwert für das Modulationsund Codierschema $MCS-w_2$ erreicht, aus dem durch Mittelwertbildung ein neuer, von der Entfernung zwischen der Basisstation und der Mobilstation abhängiger Wert $MCS-y_3$ bestimmt wird.

Die Übertragung eines dritten zeitlich begrenzten Paketdatenflusses TBF3 wird wiederum durch ein Zuordnungssignal ASS der Basisstation an die Mobilstation eingeleitet. Da der zeitliche Abstand zwischen dem Zuordnungssignal ASS und dem Ende der Übertragung des zweiten zeitlich begrenzten Paketdatenflusses TBF2 größer als die Maximalzeit T_max_last ist, wird der dritte Startwert $MCS-x_3$ für das Modulations- und Codierschema MCS nach folgender Vorschrift bestimmt:

$$MCS\text{-}x_3 \text{ mit } x_3 = Integer\ (a*y_3 + (1-a)z_3). \tag{5}$$

Dabei bestimmt sich $z_3$ aus dem Wert $MCS-z_3$ für das Modulations- und Codierschema MCS, der in Abhängigkeit der Signalqualität des Zugangssignales AS für den dritten zeitlich begrenzten Funkblock TBF3 vorgegeben ist. Während der Übertragung des dritten zeitlich begrenzten Funkblockes TBF3 wird wiederum mit Hilfe von Pollingsignalen POS der Basisstation und Control Acknowledgement-Signalen CAS der Mobilstation eine Anpassung des aktuellen Wertes MCS-x des Modulations- und Codierschemas MCS vorgenommen. Aus dem dritten Endwert MCS-w3 tritt wiederum durch Mittelwertbildung ein aktualisierter Wert $MCSy_4$, der für die gegebene Entfernung zwischen Mobilstation und Basisstation verwendet wird, ermittelt.

Die Mittelwertbildung erfolgt zum Beispiel in einer Paketdatensteuereinheit (auch Packed Control Unit genannt) in der Basisstationssteuerung (auch Base Station Controller genannt). Dazu wird für jede Funkzelle eine Tabelle angelegt, die für jede Mobilstation MS1, MS2 unter anderem folgende Informationen enthält:

| Kennung der Mobilstation TLLI | UL_TBF | DL_TBF | MCS_UL | MCS_DL | Rahmennummer des zuletzt gesendeten, zeitlich begrenzten Paketdatenflusses | Modulations und Codier-cshema des zuletzt gesendeten, zeitlich begrenzten Paketdatenflusses |
|---|---|---|---|---|---|---|
| TLLI_MS1 | Nein | ja | - | MSC-8 | Tend = FN1 | MCS-5 |
| TLLI_MS2 | Ja | ja | MCS-5 | MCS-5 | Void | void |

Als Kennung der Mobilstation ist zum Beispiel die 32 Bit TLLI-Kennung (Temporary Logical Link Identifier) geeignet, die aus der internationalen Mobilteilnehmeridentität IMSI ableitbar ist. In der Spalte DL_TBF wird vermerkt, ob in Abwärtsrichtung ein zeitlich begrenzter Paketdatenfluss gesendet wird oder nicht. In der Spalte UL_TBF wird vermerkt, ob in Aufwärtsrichtung ein zeitlich begrenzter Paketdatenfluss gesendet wird. Die Spalte MCS_DL enthält das in Abwärtsrichtung verwendete Modulations- und Codierschema. Die Spalte MCS_UL enthält das in Aufwärtsrichtung verwendete Modulations- und Codierschema. Der Eintrag Tend = FN1 steht für den Endzeitpunkt des letzten Paketdatenflusses, gekennzeichnet z.B. durch die TDMA-Frame-Nummer FN1. Zusaetzlich ist das gültige Kodierschema am Ende des letzten Paketdatenflusses gespeichert.

Um zu vermeiden, dass die Tabelle zuviel Speicherplatz in der Paketdatensteuerungseinheit PCU benötigt, können die Spalten gelöscht werden, sofern der zuletzt gesendete zeitlich begrenzte Funkblock einer Mobilstation vor einer Zeit, die größer ist als eine Zurücksetzungszeit T_DELETE, geendet hat. Für T_DELETE können zum Beispiel 20-60 Sekunden oder auch 5 Minuten eingesetzt werden. UMTS Verkehrsmodelle für HTTP-Verkehr haben gezeigt, dass die mittlere Lesezeit zwischen dem Download zweier Seiten ca. 40 Sekunden dauert. Der Timer T_Delete sollte daher in diesen Grössenordnungen einstellbar sein.

Das Ausführungsbeispiel wurde anhand des Funkparameters Modulations- und Codierschema beschrieben. Es lässt sich ohne Weiteres auf die Funkparameter Sendeleistungsregelung (Power Control), Steuerung einer richtungsselektiven Antenne und/oder einer adaptiven Antenne (Smart Antenna/Switch Beam Control) oder netzwerkgesteuerte Neuauswahl von Funkzellen (Network Control Cell Reselection) übertragen. Desweiteren kann bei der Einführung der Ortsbestimmungsdienste (Location Services) auch der Ort des Teilnehmers zwischengespeichert werden. Dazu muss die obige Tabelle durch entsprechende weitere Einträge ergänzt werden.

Im Fall der Sendeleistungssteuerung wird in der Paketdatensteuerungseinheit die abschließende Sendeleistungseinstellungen des zuletzt gesendeten Funkblocks des letzten zeitlich begrenzten Paketdatenflusses der Mobilstation in Aufwärtsrichtung sowie der Basisstation in Abwärtsrichtung gespeichert. Bei der Übertragung des nächsten zeitlich begrenzten Funkblocks eines neuen Paketdatenflusses kann diese Endeinstellung verwendet werden oder es kann in Abhängigkeit der verstrichenen Zeit ein Sendeleistungswert aus der Endeinstellung und einer maximalen Sendeleistung berechnet werden. Damit muss das Netzwerk bzw. die Teilnehmerstation nicht mit maximaler Sendeleistung zu Beginn des Paketdatenflusses starten und warten, bis geeignete Messwerte zur Sendeleistungsreduzierung vorliegen. Das macht die Leistungsregelung effizienter und erhöht die Zellkapazität.

Im Fall der Steuerung einer richtungsselektiven oder adaptiven Antenne kann die Endrichtungsinformation der Mobilstation in der Zelle während des zuletzt gesendeten zeitlich begrenzten Funkblocks des letzten Paketdatenflusses gespeichert werden. Ist die Richtung des Zugangssignals und die Richtung des ersten empfangenen Funkblocks beim nächsten zeitlich begrenzten Funkblock eines neuen Paketdatenflusses ähnlich der gespeicherten alten Richtungsinformation, so kann das Funknetz sofort in dieselbe Richtung senden, ohne langwierige Richtungsmessungen durchführen zu müssen.

Die netzwerkgesteuerte Neuauswahl von Funkzellen basiert auf Messdaten, die von der Mobilstation zur Basisstation während eines zeitlich gesendeten Paketdatenflusses in einem Netzwerkprotokoll (Network Controlled Cell Reselection, Measurement Report) gesendet werden. Es wird der Empfangspegel der Zelle sowie der Nachbarzellen und auch der Interferenzpegel am Ort der Teilnehmerstation übertragen. In dem Netzwerk werden diese Werte pro Teilnehmer gespeichert oder es wird ein Mittelwert gebildet, der sich auf Messungen über mehrere zeitlich begrenzte Funkblöcke in einem periodischen Messzeitraum bezieht. Damit kann das Netzwerk entscheiden, ob der Teilnehmer im Fall von Kapazitätsengpässen in der jetzigen Zelle in eine Nachbarzelle verschoben werden soll. Desgleichen gilt im Fall von Nachbarzellen, in denen die Verbindung besser als zur jetzigen Zelle ist. In der Tabelle können die Messwerte gespeichert werden, so dass das Netzwerk über einen längeren Zeitraum über die Verbindungsqualität zum Teilnehmer informiert ist. Ausserdem werden evtl. Zellwechsel und deren Grund (Signalpegel, Kapazität, etc.) gespeichert.

Diese Messergebnisse koennen auch in den Gleichungen (1)bis (4) als Eingangsparameter verwendet werden.

Bei den Ortsbestimmungsdiensten (Location Services) wird die Position des Teilnehmers mittels standardisierter Verfahren ermittelt, beispielsweise ueber Signallaufzeiten zu mehreren Basisstationen im Funkbereich des Teilnehmers. Dieser Positions-Wert wird ebenfalls periodisch ermittelt und zwischengespeichert, um Anfragen (location request) von nachfolgenden Netzeinheiten zur Position eines Teilnehmers schnell befriedigen zu können.

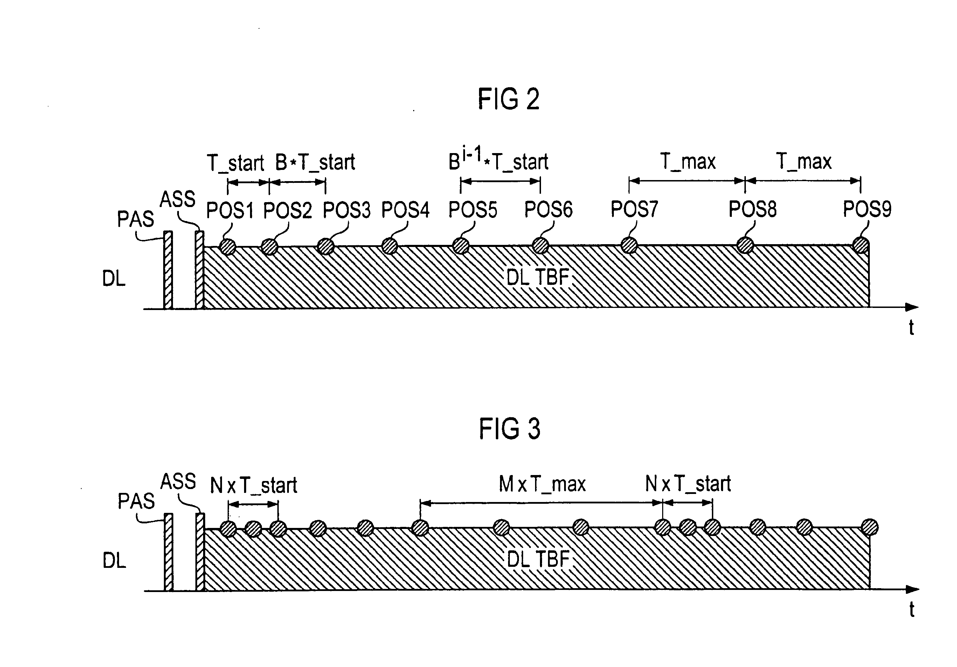

Der zeitliche Abstand zwischen aufeinanderfolgenden Pollingsignalen während der Übertragung eines zeitlich begrenzten Paketdatenflusses kann unterschiedlich eingestellt werden. Gemäß einem Ausführungsbeispiel (siehe Figur 2) beträgt der zeitliche Abstand zwischen einem ersten Pollingsignal POS1 und einem zweiten Pollingsignal POS2 T_Start. Die darauf folgenden Pollingsignale POSi folgen mit zunehmenden zeitlichen Abständen, für die beispielsweise gilt:

$$T=B^{i-1}*T\_start \tag{6}$$

Dabei ist T der zeitliche Abstand zwischen benachbarten Pollingsignalen i und i+1 und B ein konstanter, frei wählbarer Faktor. Sobald der zeitliche Abstand zwischen benachbarten Pollingsignalen POSi, POSi+1 einen Maximalwert T_max erreicht hat, wird dieser beibehalten.

In einem weiteren Ausführungsbeispiel (siehe Figur 3) werden die ersten N Pollingsignale POS in einem konstanten Zeitabstand T_start gesendet. Anschließend wird der zeitliche Abstand zwischen aufeinander folgenden Pollingsignalen POS entsprechend einem exponentiellen Gesetz vergrößert:

$$T=B^{i-1}*T\_start, \qquad\qquad (7)$$

wie anhand der Figur 2 erläutert. Bei Erreichen eines Maximalwerts T_max für den zeitlichen Abstand werden die folgenden M Pollingsignale jeweils im zeitlichen Abstand T_max gesendet. Danach wird der zeitliche Abstand aufeinander folgender Pollingsignale für die nächsten N Pollingsignale wiederum auf den Startwert T_start gesetzt. Diese zeitliche Verteilung der Pollingsignale POS eignet sich besonders zur Einstellung von richtungsselektiven/adaptiven Antennen.

**Patentansprüche**

1. Verfahren zur paketvermittelten Datenübertragung in einem Funkkommunikationssystem mit mehreren Funkzellen,

   - bei dem ein Paketdatenfluss zwischen einer sendenden Funkstation und einer empfangenden Funkstation in Form von aufeinander folgenden, zeitlich begrenzten Funkblöcken übertragen wird,
   - bei dem für die Übertragung eines ersten zeitlich begrenzten Funkblockes mindestens ein Funkparameter in Abhängigkeit einer Entfernung zwischen der sendenden Funkstation und der empfangenden Funkstation und in Abhängigkeit einer Signalqualität eines von der sendenden Funkstation gesendeten und der empfangenden Funkstation empfangenen Signals bestimmt wird.

2. Verfahren nach Anspruch 1,

   - bei dem für die Übertragung weiterer Paketdatenflüsse mit weiteren zeitlich begrenzten Funkblöcken die Bestimmung des mindestens einen Funkparameters jeweils in Abhängigkeit der Entfernung zwischen der sendenden Funkstation und der empfangenden Funkstation und in Abhängigkeit der Signalqualität eines von der sendenden Funkstation gesendeten und von der empfangenden Funkstation empfangenen Signals und von einem vorherigen Wert des Funkparameters bei der Übertragung eines vorherigen zeitlich begrenzten Funkblocks eines vorherigen Paketdatenflusses bestimmt wird, sofern der zeitliche Abstand zwischen dem Ende der vorherigen Übertragung und der aktuellen Übertragung eine vorgegebene Maximalzeit nicht überschreitet.

3. Verfahren nach Anspruch 2,

   - bei dem der Einfluss des vorherigen Wertes des Funkparameters mit zunehmendem zeitlichen Abstand zwischen der Übertragung des vorherigen Funkblocks des vorherigen Paketdatenflusses und des weiteren Funkblocks des neuen Paketdatenflusses abnimmt.

4. Verfahren nach Anspruch 3,

   - bei dem die Abnahme des Einflusses des vorherigen Wertes mittels einer mathematischen Gleichung beschreibbar ist.

5. Verfahren nach Anspruch 4,

   - bei dem für den Funkparameter n Werte mit der Bezeichnung FP-x, x=1,...,n zur Verfügung stehen,
   - bei dem, falls der zeitliche Abstand zwischen dem Ende der Übertragung des vorherigen Funkblocks des letzten Paketdatenflusses und der Übertragung des weiteren Funkblocks des neuen Paketdatenflusses größer als die Maximalzeit ist, dem Funkparameter der Wert FP-x mit x
   x=Integer(a*y+(1-a)*z) zugewiesen wird, wobei

a ein Gewichtsfaktor mit 0>a>1,

FP-y ein für die gegebene Entfernung zwischen sendender Funkstation und empfangender Funkstation vorgegebener Wert für den Funkparameter und

FP-z ein für die gegebene Signalqualität eines von der sendenden Funkstation gesendeten und von der empfangenden Funkstation empfangenen Signals vorgegebener Wert für den Funkparameter ist,

- bei dem, falls der zeitliche Abstand zwischen dem Ende der Übertragung des vorherigen Funkblocks und der Übertragung des weiteren Funkblocks geringer als die Maximalzeit ist, dem Funkparameter der Wert FP-x mit

- x=Integer(b*y+c*z+d*(w-y)*T/T_max_last)
  
  zugewiesen wird, wobei

b, c, d Gewichtsfaktoren mit b+c+d=1 sind,

0>b,c,d>1,

FP-y ein für die gegebene Entfernung zwischen der sendenden Funkstation und der empfangenden Funkstation vorgegebener Wert für den Funkparameter und

FP-z ein für die gegebene Signalqualität eines von der sendenden Funkstation gesendeten und von der empfangenden Funkstation empfangenen Signals vorgegebener Wert für den Funkparameter ist,

FP-w der vorherige Wert des Funkparameters

T_max_last die Maximalzeit

T der zeitliche Abstand zwischen dem Ende der Übertragung des vorherigen Funkblocks und der Übertragung des weiteren Funkblocks ist.

6. Verfahren nach Anspruch 5,

   - bei dem die Gewichtsfaktoren zeitabhängig sind.

7. Verfahren nach einem der Ansprüche 1 bis 6,

   - bei dem am Ende der Übertragung dieses Funkblocks der aktuelle Wert des Funkparameters in Abhängigkeit der Entfernung zwischen der sendenden Funkstation und der empfangenden Funkstation gespeichert wird und bei dem jeweils aus dem aktuellen Wert des Funkparameters und dem gespeicherten vorgegebenen Wert des Funkparameters ein neuer vorgegebener Wert des Funkparameters für die gegebene Entfernung zwischen der sendenden Funkstation und der empfangenden Funkstation berechnet und gespeichert wird.

8. Verfahren nach Anspruch 7,

   - bei dem der neue vorgegebene Wert des Funkparameters durch Mittelwertbildung aus dem aktuellen Wert des Funkparameters und dem gespeicherten vorgegebenen Wert des Funkparameters berechnet wird.

9. Verfahren nach einem der Ansprüche 1 bis 8,

   - bei dem der Funkparameter zusätzlich in Abhängigkeit einer Funkzelle, in der sich die sendende Funkstation und/oder die empfangende Funkstation befindet, bestimmt wird.

10. Verfahren nach einem der Ansprüche 1 bis 9,

    - bei dem die Verwaltung der Wert für den Funkparameter in einem Operations- und Wartungszentrum des Funkkommunikationssystems erfolgt.

11. Verfahren nach einem der Ansprüche 1 bis 10,

    - bei dem der Funkparameter ein Modulations- und Codierschema, ein Parameter zur Sendeleistungsregelung, ein Parameter zur Steuerung einer richtungsselektiven und/oder adaptiven Antenne und/oder eine netzwerkgesteuerte Neuauswahl von Funkzellen ist.

12. Verfahren nach einem der Ansprüche 1 bis 11,

    - bei dem der Funkparameter während der Übertragung der zeitlich begrenzten Funkblöcke eines Paketdatenflusses in Abhängigkeit des Empfangspegels und/oder der Qualität der Datenübertragung angepasst wird.

**13.** Verfahren nach Anspruch 12,

- bei dem die Qualität der Datenübertragung anhand von Messwerten beurteilt wird, die auf Anforderung des Funkkommunikationsnetzes von der empfangenden Funkstation gesendet werden,
- bei dem der zeitliche Abstand zwischen der Anforderung der Messwerte veränderlich ist.

**14.** Verfahren nach Anspruch 13,

- bei dem die Anforderung der Messwerte zu Beginn der Datenübertragung häufiger als zu Ende der Datenübertragung erfolgt.

**15.** Verfahren nach Anspruch 13 oder 14,

- bei dem der funktionale Zusammenhang des zeitlichen Abstands zwischen den Anforderungen mathematisch beschreibbar ist.

FIG 1

EP 1 276 264 A1

## FIG 2

$T\_start$ $B * T\_start$ $B^{i-1} * T\_start$ $T\_max$ $T\_max$

PAS ASS POS1 POS2 POS3 POS4 POS5 POS6 POS7 POS8 POS9

DL DL TBF

t

## FIG 3

PAS ASS $N \times T\_start$ $M \times T\_max$ $N \times T\_start$

DL DL TBF

t

EP 1 276 264 A1

Europäisches Patentamt

**EUROPÄISCHER RECHERCHENBERICHT**

Nummer der Anmeldung

EP 01 11 6583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 99 12304 A (ERICSSON TELEFON AB L M) 11. März 1999 (1999-03-11) | 1,9-15 | H04L1/00 |
| A | * Seite 2, Zeile 10 - Zeile 21 *<br>* Seite 4, Zeile 23 - Zeile 30 *<br>* Seite 9, Zeile 1 - Zeile 12 *<br>* Seite 9, Zeile 24 - Zeile 26 *<br>* Seite 10, Zeile 4 - Zeile 10 *<br>* Seite 11, Zeile 28 - Seite 12, Zeile 7 *<br>* Seite 13, Zeile 3 - Zeile 28 *<br>* Seite 14, Zeile 9 - Zeile 17 *<br>* Seite 16, Zeile 28 - Zeile 30 *<br>* Seite 17, Zeile 17 - Zeile 22 *<br>* Seite 23, Zeile 21 - Zeile 25 *<br>* Seite 24, Zeile 6 - Seite 25, Zeile 12 *<br>* Seite 27, Zeile 9 - Zeile 12 *<br>* Seite 28, Zeile 12 - Zeile 15 *<br>------ | 2-8 | |
| A | EP 0 845 916 A (ERICSSON TELEFON AB L M) 3. Juni 1998 (1998-06-03)<br>* Seite 2, Zeile 52 - Seite 3, Zeile 2 *<br>* Seite 5, Zeile 39 - Zeile 41 *<br>------ | 1-15 | **RECHERCHIERTE SACHGEBIETE (Int.Cl.7)** |
| A | WO 01 26236 A (ERICSSON TELEFON AB L M) 12. April 2001 (2001-04-12)<br>* Seite 5, Zeile 33 - Seite 6, Zeile 4 *<br>* Seite 7, Zeile 32 - Seite 8, Zeile 2 *<br>* Seite 13, Zeile 8 - Zeile 13 *<br>* Seite 15, Zeile 5 - Zeile 9 *<br>* Seite 16, Zeile 27 - Seite 17, Zeile 27 *<br>* Seite 18, Zeile 33 - Seite 19, Zeile 11 *<br>------ | 1-15 | H04L<br>H04Q<br>H04B |
| A | WO 00 49760 A (ERICSSON TELEFON AB L M) 24. August 2000 (2000-08-24)<br>* Seite 3, Zeile 10 - Zeile 22 *<br>* Seite 5, Zeile 10 - Zeile 16 *<br>------ | 1-15 | |

Der vorliegende Recherchenbericht wurde für alle Patentansprüche erstellt

| Recherchenort | Abschlußdatum der Recherche | Prüfer |
|---|---|---|
| DEN HAAG | 1. Februar 2002 | Heinrich, D |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 01 11 6583

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 9912304 | A | 11-03-1999 | US | 6167031 A | 26-12-2000 |
| | | | AU | 9012598 A | 22-03-1999 |
| | | | BR | 9811397 A | 22-08-2000 |
| | | | CN | 1277764 T | 20-12-2000 |
| | | | EP | 1010288 A1 | 21-06-2000 |
| | | | JP | 2001515307 T | 18-09-2001 |
| | | | WO | 9912304 A1 | 11-03-1999 |
| | | | TW | 410514 B | 01-11-2000 |
| EP 0845916 | A | 03-06-1998 | US | 5983101 A | 09-11-1999 |
| | | | EP | 0845916 A2 | 03-06-1998 |
| WO 0126236 | A | 12-04-2001 | SE | 515050 C2 | 05-06-2001 |
| | | | AU | 7819600 A | 10-05-2001 |
| | | | WO | 0126236 A1 | 12-04-2001 |
| | | | SE | 9903551 A | 02-04-2001 |
| WO 0049760 | A | 24-08-2000 | AU | 3202500 A | 04-09-2000 |
| | | | BR | 0008299 A | 22-01-2002 |
| | | | EP | 1153494 A1 | 14-11-2001 |
| | | | WO | 0049760 A1 | 24-08-2000 |

EPO FORM P0461

Für nähere Einzelheiten zu diesem Anhang : siehe Amtsblatt des Europäischen Patentamts, Nr.12/82